# EUROPÄISCHE PATENTSCHRIFT

(11) **EP 1 626 994 B1**
(45) Veröffentlichungstag und Bekanntmachung des Hinweises auf die Patenterteilung: **29.07.2009**
(21) Anmeldenummer: 04733535.1
(22) Anmeldetag: 18.05.2004
(51) Int. Cl.: C08F 2/02, C09J 7/02, C08F 4/00

(54) **VERFAHREN ZUR LÖSUNGSMITTELFREIEN HERSTELLUNG VON ACRYLATHAFTKLEBEMASSEN**
SOLVENT-FREE PRODUCTION METHOD FOR PRODUCING ACRYLATE PRESSURE-SENSITIVE ADHESIVE SUBSTANCES
PROCEDE DE FABRICATION DE MASSES AUTO-ADHESIVES SANS SOLVANTS

(30) Priorität: 19.05.2003 DE 10322830
(43) Veröffentlichungstag der Anmeldung: 22.02.2006
(73) Patentinhaber: tesa SE, 20253 Hamburg (DE)
(72) Erfinder: ERWIN, Jessica, 22399 Hamburg (DE); MASSOW, Klaus, 22393 Hamburg (DE); ZÖLLNER, Stephan, 21244 Buchholz / Nordheide (DE)
(74) Vertreter: Stubbe, Andreas
(86) Internationale Anmeldenummer: PCT/EP2004/005349
(87) Internationale Veröffentlichungsnummer: WO 2004/101627

(56) Entgegenhaltungen:
- US-A1- 2002 193 539
- US-A1- 2004 092 685

## Beschreibung

Die vorliegende Erfindung betrifft ein verbessertes Verfahren zur kontinuierlichen Herstellung von Acrylathaftklebemassen durch lösungsmittelfreie Polymerisation.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vernetzung oder durch ES-Härtung (ES: Elektronenstrahlung). Der beschriebene Prozess ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Verbesserung dieser Nachteile bedeutet der Heißschmelz-Prozess (Hotmelt-Prozess). Hier wird der Haftkleber in der Schmelze auf das Trägermaterial aufgetragen.

Mit dieser neuen Technik sind aber auch Einschränkungen verbunden. Vor der Beschichtung wird der Haftklebemasse, die weiterhin in Lösung hergestellt wird, das Lösemittel in einem Trocknungsextruder entzogen. Durch diese sogenannte Aufkonzentration im Trocknungsextruder wird der Polymerlösung das Lösemittel bis zu einem Restgehalt von < 2 % entzogen. Da die Polymerisation somit weiter in Lösung erfolgt, stellt der hohe Verbrauch an organischen Lösemitteln sowohl ein ökologisches als auch ein ökonomisches Problem dar. Hinzu kommt, dass mögliche Lösungsmittelreste in der Klebmasse bei der anschließenden Verwendung zu Geruchsbelästigung führen können.

Eine lösemittelfreie Polymerisation des Acrylathaftklebers würde somit zu einer erheblichen Verbesserung des gesamten Verfahrens führen. Dieses ist jedoch sehr schwierig, da Polymerisationen mit einer starken Wärmeentwicklung und einem Anstieg der Viskosität verbunden sind. Die hohen Viskositäten können zu Problemen der Vermischung und damit auch der Wärmeabfuhr und Reaktionsführung führen. Die radikalische Polymerisation von Vinylmonomeren ist bekannt und umfangreich beschrieben (Ullmann's Encyclopedia of Industrial Chemistry, 2nd Edt. Vol. A21, 1992, 305ff, VCH Weinheim).

In EP 016 03 94 wird die lösungsmittelfreie Herstellung von Polyacrylaten in einem Doppelschneckenextruder beschrieben. Allerdings weisen die nach diesem Verfahren hergestellten Acrylatschmelzhaftkleber einen zum Teil erheblich hohen Gelanteil von bis zu 55 % auf, wodurch deren Weiterverarbeitung stark beeinträchtigt ist. Der hohe Gelanteil führt dazu, dass sich die Klebmasse nicht mehr beschichten lässt.

Eine Lösung zur Verminderung dieses Nachteils bieten Polyacrylatklebemassen mit mittlerem niedrigen Molekulargewicht und enger Molekulargewichtsverteilung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitern die Molekulargewichtsverteilung.

Als eine weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Cu-, Ag- oder Au-Komplexe [EP 0 824 111; EP 0 826 698; EP 0 824 110; EP 0 841 346; EP 0 850 957] eingesetzt werden. Die unterschiedlichen Möglichkeiten der ATRP sind ferner in den US 5,945,491, US 5,854,364 und US 5,789,487 beschrieben. Generell werden Metallkatalysatoren eingesetzt, die als Nebenwirkung die Alterung der Haftklebemassen negativ beeinflussen (Vergelung, Umesterung). Zudem sind die meisten Metallkatalysatoren giftig, verfärben die Klebemasse und lassen sich nur durch aufwendige Fällungen aus dem Polymer entfernen.

Eine weitere Variante ist der RAFT-Prozess (Reversible Addition-Fragmentation Chain Transfer). Der Prozess ist in den WO 98/01478 und WO 99/31144 ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen. Eine Verbesserung wurde mit dem von BDF in DE 100 30.217 beschriebenen Prozess erreicht.

In der US 4,581,429 wird ein kontrolliertes radikalisches Polymerisationsverfahren offenbart. Das Verfahren wendet als Initiator eine Verbindung der Formel R'R"N-O-X an, worin X eine freie radikalische Spezies darstellt, die ungesättigte Monomere polymerisieren kann. Die Reaktionen weisen aber im Allgemeinen geringe Umsatzraten aus. Besonders problematisch ist die Polymerisation von Acrylaten, die nur zu sehr geringen Ausbeuten und Molekulargewichten abläuft.

In der WO 98/13392 werden offenkettige Alkoxyamin-Verbindungen beschrieben, die ein symmetrisches Substitutionsmuster aufweisen. Die EP 0 735 052 A1 offenbart ein Verfahren zur Herstellung thermoplastischer Polymere mit engen Polydispersitäten.

Die WO 96/24620 beschreibt ein Polymerisationsverfahren, bei dem sehr spezielle Radikalverbindungen, wie z.B. Phosphor-enthaltende Nitroxide, beschrieben werden.

Die WO 98/30601 offenbart spezielle Nitroxyle, die auf Imidazolidin basieren.

Die WO 98/4408 offenbart spezielle Nitroxyle, die auf Morpholinen, Piperazinonen und Piperazindionen basieren.

Die DE 199 49 352 A1 offenbart heterocyclische Alkoxyamine als Regulatoren in kontrollierten radikalischen Polymerisationen.

Entsprechende Weiterentwicklungen der Alkoxyamine bzw. der korrespondierenden freien Nitroxide verbesserten die Effizienz zur Herstellung von Polyacrylaten. [Hawker, C.J. Vortrag, Hauptversammlung der American Chemical Society in San Francisco, Frühjahr 1997; Husemann, M., IUPAC World-Polymer Meeting 1998, Gold Coast, Australien, Vortrag über "Novel Approaches to Polymeric Brushes using 'Living' Free Radical Polymerizations" (Juli 1998)]

In den vorstehend erwähnten Patenten bzw. Vorträgen wurde versucht, die Steuerung von radikalischen Polymerisationsreaktionen zu verbessern. Dennoch besteht der Bedarf für ein Polymerisationsverfahren, welches hoch reaktiv ist und mit dem sich hohe Umsätze bei gleichzeitig hohem Molekulargewicht und niedriger Polydispersität realisieren lassen. Dies gilt insbesondere für die Copolymerisation von Acrylathaftklebemassen, da hier hohe Molekulargewichte essentiell für Haftklebeanwendungen sind. Diese Anforderungen wurden in DE 100 36 801 A1 (siehe auch US 2004/092685 A) erfüllt, wobei die Polymerisation in organischem Lösemittel oder Wasser als Lösemittel erfolgt, so dass hier wieder das Problem des hohen Lösemittelverbrauchs bzw. Lösemittelenizug gegeben ist. Auch die DE 100 30 217 A1 (siehe auch US 2002/193539 A) beschreibt ein Verfahren zur Herstellung von Polyacrylaten unter Verwendung einer polymerisationsregelnden Substanz, aber auch hier erfolgt die Polymerisation in einem Reaktor. Ein Extruder wird lediglich nach der Polymerisation zur Entfernung des Lösungsmittels eingesetzt.

Aufgabe der Erfindung ist es daher, einen Prozess zur lösemittelfreien Herstellung von Acrylathaftschmelzklebem zur Verfügung zu stellen, welcher die Nachteile des genannten Standes der Technik nicht oder nur in vermindertem Umfang aufweist.

Überraschend wurde gefunden, dass sich der Einsatz von regelnden Substanzen, die eine enge Molekulargewichtsverteilung der Polyacrylate bewirken, besonders vorteilhaft auf den lösemittelfreien Polymerisationsprozess in einem Reaktionsextruder, insbesondere einem Planetwalzenextruder auswirkt.

Durch den Einsatz von Substanzen, die den Polymerisationsprozess regeln und im Weiteren genauer beschrieben werden, entstehen bei der lösemittelfreien Polymerisation im Planetwalzenextruder Polymere mit einer engen Molekulargewichtsverteilung. Der Anteil an niedermolekularen und an hochmolekularen Molekülen in dem Polymer wird dabei stark vermindert. Durch den Wegfall der hochmolekularen Anteile verringert sich die Fließviskosität. Dieses führt zu einer besseren Vermischung im Planetwalzenextruder und somit auch zu einer Verbesserung des Wärmeeintrages und der Wärmeabfuhr. Mit dem Einsatz der regelnden Substanzen, die dazu führen, dass bei der Polymerisation im Planetwalzenextruder Polymere mit einer engen Molekulargewichtsverteilung entstehen, wurde überraschend gefunden, dass dadurch der Prozess der lösemittelfreien Polymerisation erheblich unempfindlicher gegenüber Prozessschwankungen wird. Die Tendenz zur Gelbildung bei Prozessschwankungen wie beispielweise der Temperatur oder der Drehzahl wird erheblich und unvorhersehbar verringert. Weiterhin wurde gefunden, dass die so hergestellten Polymere eine höhere Vernetzungseffizient aufweisen, welches vorteilhaft für die klebtechnischen Eigenschaften ist.

Die Erfindung betrifft daher ein Verfahren zur kontinuierlichen lösungsmittelfrelen Polymerisation von Acrylmonomeren zu Polyacrylaten unter Anwesenheit polymerisationsregelnder Substanzen, wobei mindestens ein Polymerisationsschritt innerhalb zumindest eines Reaktionsextruders durchgeführt wird. Sehr vorteilhaft ist der Reaktionsextruder ein Planetwalzenextruder, insbesondere ein hydraulisch gefüllter Planetwalzenextruder.

Vorteilhaft werden die polymerisationsregelnden Substanzen aus der Gruppe der Nitroxid- und/oder der RAFT-Regler gewählt, insbesondere der Alkoxyamine, der Triazolinylverbindungen, der Thioester und/oder der Thiocarbonate.

Besonders geeignet als regelnde Substanz für die lösemittelfreie Polymerisation im Planetwalzenextruder haben sich asymmetrische Alkyoxyamine des Typs (II) in Verbindung mit deren freien Nitroxylvorstufen und einem thermisch langsam zerfallenden Azo- oder Peroxoinitiator erwiesen.

Sehr vorteilhaft lässt sich ein Initiatorsystem für radikalische Polymerisationen bestehend aus einer Kombination von Verbindungen der allgemeinen Formeln 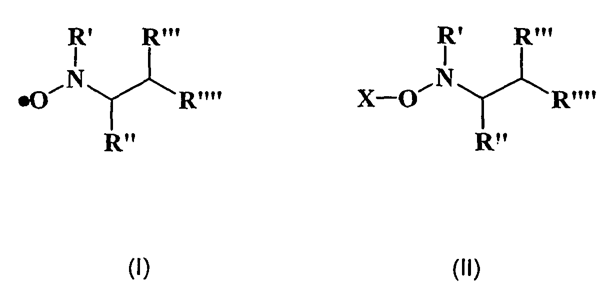 einsetzen, worin
◆ R', R", R"', R'''' unabhängig voneinander gewählt sind und
   a) verzweigte und unverzweigte C₁- bis C₁₈-Alkylreste; C₃- bis C₁₈-Alkenylreste; C₃- bis C₁₈-Alkinylreste;
   b) durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   c) C₂-C₁₈-Hetero-Alkylreste mit mindestens einem O-Atom und/oder einer NR-Gruppe in der Kohlenstoffkette; wobei R gewählt ist aus einer der Gruppen a), b) bzw. d) bis g),
   d) mit zumindest einer Estergruppe, Amingruppe, Carbonatgruppe und/oder Epoxidgruppe und/oder mit Schwefel und/oder mit Schwefel-Verbindungen, insbesondere Thioether oder Dithioverbindungen, substituierte C₁-C₁₈-Alkylreste, C₃-C₁₈-Alkenylreste, C₃-C₁₈-Alkinylreste;
   e) C₃-C₁₂-Cycloalkylreste
   f) C₆-C₁₀-Arylreste
   g) Wasserstoff darstellen;
◆ X eine Gruppe mit mindestens einem Kohlenstoffatom wiedergibt und derart ist, daß das von X abgeleitete freie Radikal X• eine Polymerisation von ethylenisch ungesättigten Monomeren starten kann.

Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₀-Arylreste dienen beispielsweise Phenyl, Naphthyl, Benzyl, oder weitere substituierte Phenylreste, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

In einer besonders bevorzugten Ausführungsform der Erfindung wird eine Kombination aus den Verbindungen (la) und (IIa) als Initiatorsystem eingesetzt.

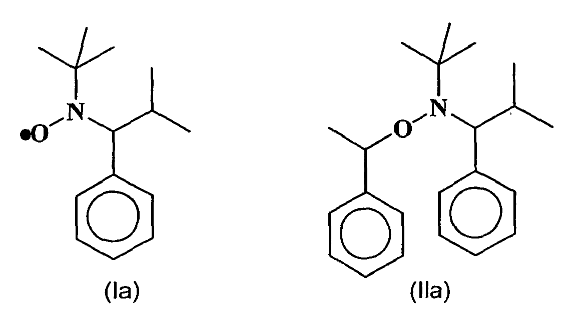

In einer sehr vorteilhaften Weiterentwicklung des erfinderischen Initiatorsystems sind zusätzlich weitere radikalische Initiatoren zur Polymerisation enthalten, insbesondere thermisch zerfallende radikalbildende Azo- oder Peroxo-Initiatoren. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die Verbindungen der Formel (II) liegt vorzugsweise in einer Menge von 0,0001 Mol-% bis 1 Mol-%, bevorzugter in einer Menge von 0,0008 bis 0,0002 Mol-% bezogen auf die Monomere vor. Die Verbindungen der Formel (I) liegt vorzugsweise in einer Menge von 1 Mol-% bis 10 Mol-%, bevorzugter in einer Menge von 3 bis 7 Mol-% bezogen auf Verbindung (II) vor. Der thermisch zerfallende Initiator aus c) liegt besonders bevorzugt in einer Menge von 1 bis 10 Mol-%, mehr bevorzugt in einer Menge von 3 bis 7 Mol.-% bezogen auf Verbindung der Formel (II) vor.

Die Initiierung der Reaktion erfolgt durch Spaltung der X-O-Bindung der Initiatorkomponente der Formel (II). Vorzugsweise wird die Spaltung der Bindung durch Ultraschallbehandlung, Erhitzen oder Aussetzen elektromagnetischer Strahlung im Wellenlängenbereich der γ-Strahlung oder durch Mikrowellen bewirkt. Bevorzugter wird die Spaltung der C-O-Bindung durch Erwärmen bewirkt und findet bei einer Temperatur zwischen 70 und 160 °C statt.

In einer weiteren vorteilhaften Entwicklung wird als Initiatorsystem zumindest eine Triazolinylverbindung der allgemeinen Formel 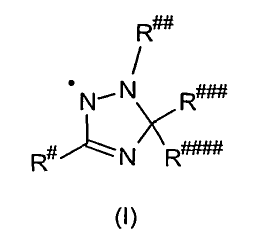 eingesetzt, wobei R^{#}, R^{##}, R^{###}, R^{####} unabhängig voneinander gewählt sind oder gleich sind
- verzweigte und unverzweigte C₁- bis C₁₈-Alkylreste; C₃- bis C₁₈-Alkenylreste; C₃- bis C₁₈-Alkinylreste;
- C₁- bis C₁₈-Alkxoyreste
- durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
- C₂-C₁₈-Hetero-Alkylreste mit mindestens einem O-Atom und/oder einer NR^{#####}-Gruppe in der Kohlenstoffkette, wobei R^{#####} ein beliebiger organischer Rest sein kann und insbesondere verzweigte und unverzweigte C₁- bis C₁₈-Alkylreste; C₃- bis C₁₈-Alkenylreste; C₃- bis C₁₈-Alkinylreste ist,
- mit zumindest einer Estergruppe, Amingruppe, Carbonatgruppe, Cyanogruppe, Isocyanogruppe und/oder Epoxidgruppe und/oder mit Schwefel substituierte C₁-C₁₈-Alkylreste, C₃-C₁₈-Alkenylreste, C₃-C₁₈-Alkinylreste;
- C₃-C₁₂-Cycloalkylreste
- C₆-C₁₀-Arylreste
- Wasserstoff darstellen.

Kontrollreagenzien (Triazolinylverbindungen im Sinne des oben dargestellten Initiatorsystems) des Typs (I) bestehen in einer mehr bevorzugten Auslegung aus folgenden weiter eingeschränkten Verbindungen:
Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl-, Ethyl-, Propyl-, Isopropyl-, Butyl-, Isobutyl-, t-Butyl-, Pentyl-, 2-Pentyl-, Hexyl-, Heptyl-, Octyl-, 2-Ethylhexyl-, t-Octyl-, Nonyl-, Decyl-, Undecyl-, Tridecyl-, Tetradecyl-, Hexadecyl- und Octadecylreste.

Beispiele für Alkenylreste mit 3 bis 18 Kohlenstoffatomen sind Propenyl-, 2-Butenyl-, 3-Butenyl-, Isobutenyl-, n-2,4-Pentadienyl-, 3-Methyl-2-butenyl-, n-2-Octenyl-, n-2-Dodecenyl-, Isododecenyl- und Oleylreste.

Beispiele für Alkinylreste mit 3 bis 18 Kohlenstoffatomen sind Propinyl-, 2-Butinyl-, 3-Butinyl-, n-2-Octinyl- und n-2-Octadecinylreste.

Beispiele für Hydroxy-substituierte Alkylreste sind Hydroxypropyl-, Hydroxybutyl- oder Hydroxyhexylreste.

Beispiele für Halogen-substituierte Alkylreste sind Dichlorobutyl-, Monobromobutyl- oder Trichlorohexylreste.

Ein geeigneter C₂-C₁₈-Hetero-Alkylrest mit mindestens einem O-Atom in der Kohlenstoffkette ist beispielsweise -CH₂-CH₂-O-CH₂-CH₃.

Als C₃-C₁₂-Cycloalkylreste dienen beispielsweise Cyclopropyl-, Cyclopentyl-, Cyclohexyl- oder Trimethylcyclohexylreste.
Als C₆-C₁₀-Arylreste dienen beispielsweise Phenyl-, Naphthyl-, Benzylreste, oder weitere substituierte Phenylreste, wie z.B. Ethylbenzol, Propylbenzol, p-tert.-Butylbenzyl etc., Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

In einer besonders vorteilhaften Vorgehensweise werden die Triazolinylverbindungen derart gewählt, dass R^{###} und R^{####} in Form einer Spiroverbindung miteinander verbunden sind.

Sehr bevorzugt werden Verbindungen (la) und (Ib) als Kontrollreagenzien eingesetzt.

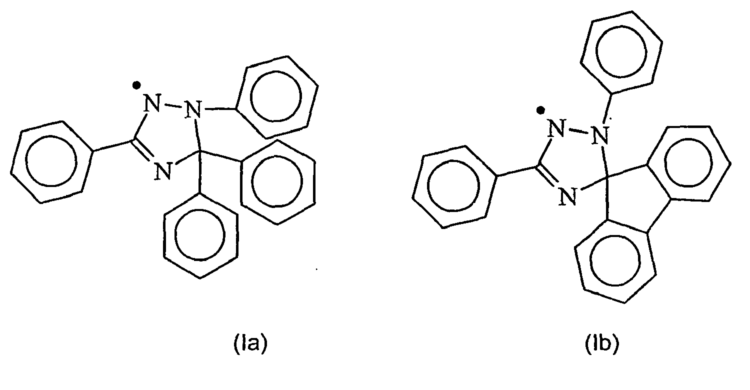

Die Verbindungen des Initiatorsystems liegen vorzugsweise in einer Menge von 0.001 Mol-% bis 10 Mol-%, bevorzugt in einer Menge von 0.01 bis 1 Mol-%, bezogen auf die Monomermischung, vor.

In einer weitem Entwicklung des Verfahrens wurde die lösungmittelfreie Polymerisation durch Anwesenheit zumindest eines radikalischen Initiators mit zumindest einem Thioester als Polymerisationsregler durchgeführt.
In einer besonders bevorzugten Variante des erfinderischen Verfahrens werden als Thioester Verbindungen der folgenden allgemeinen Strukturformel 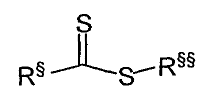 eingesetzt, wobei R^{§} und R^{§§} unabhängig voneinander gewählt sind und R^{§} ein Rest aus einer der Gruppen i) bis iv) und R^{§§} ein Rest aus einer der Gruppen i) bis iii) ist:
i) C₁-C₁₈-Alkyl-, C₂-C₁₈-Alkenyl-, C₂-C₁₈-Alkinyl-, jeweils linear oder verzweigt; Aryl-, Phenyl-, Benzyl-, aliphatische und aromatische Heterocyclen,
ii) -NH₂, -NH-R¹, -NR¹R², -NH-C(O)-R¹, -NR¹-C(O)-R², -NH-C(S)-R¹, -NR¹-C(S)-R², 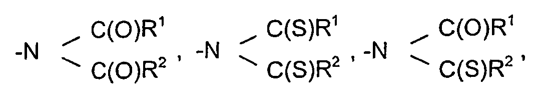 wobei R¹ und R² unabhängig voneinander gewählte Reste aus der Gruppe i) sind
iii) -S-R³, -S-C(S)-R³, wobei R³ ein Rest gewählt aus einer der Gruppen i) oder ii) ist,
iv) -O-R³, -O-C(O)-R³, wobei R³ ein Rest gewählt aus einer der Gruppen i) oder ii) ist.

Als Regler werden demnach bevorzugt Dithioester und Trithiocarbonate eingesetzt. In einer weiteren vorteilhaften Variante des erfinderischen Verfahrens wird der Thioester mit einem Gewichts-Anteil von 0,001 % - 5 %, insbesondere von 0,025 % bis 0,25 % eingesetzt. Zudem ist es im erfinderischen Sinne sehr günstig, wenn das molare Verhältnis von freiem radikalischen Initiator zu Thioester im Bereich von 50 : 1 und 1 : 1, insbesondere zwischen 10 : 1 und 2 : 1 liegt.

Als Polymerisationsregler lassen sich dabei sehr vorteilhaft im erfinderischen Sinne Trithiocarbonate oder Dithioester einsetzen.

Zur Polymerisation wird bevorzugt ein Kontrollreagenz der allgemeinen Formel eingesetzt: 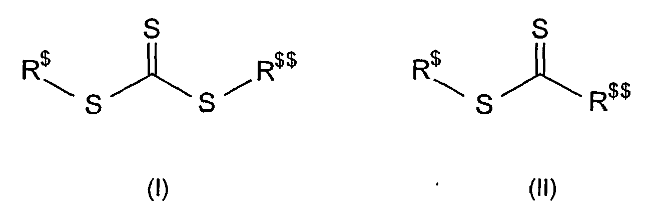 worin
- R^{$} und R^{$$} unabhängig voneinander gewählt oder gleich sind
   - verzweigte und unverzweigte C₁- bis C₁₈-Alkylreste; C₃- bis C₁₈-Alkenylreste; C₃- bis C₁₈-Alkinylreste;
   - H oder C₁- bis C₁₈ Alkxoy
   - durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   - C₂-C₁₈-Hetero-Alkylreste mit mindestens einem O-Atom und/oder einer NR*-Gruppe in der Kohlenstoffkette
   - mit zumindest einer Estergruppe, Amingruppe, Carbonatgruppe, Cyano-, Isocyano- und/oder Epoxidgruppe und/oder mit Schwefel substituierte C₁-C₁₈-Alkylreste, C₃-C₁₈-Alkenylreste, C₃-C₁₈-Alkinylreste;
   - C₃-C₁₂-Cycloalkylreste
   - C₆-C₁₈- Aryl- oder Benzylreste
   - Wasserstoff darstellen;

Kontrollreagenzien des Typs (I) bestehen in einer mehr bevorzugten Auslegung aus folgenden Verbindungen:
Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Als Beispiele für Alkylreste, welche 1 bis 18 Kohlenstoffatome enthalten, seien Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl genannt.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter C₂-C₁₈-Hetero-Alkylrest mit mindestens einem O-Atom in der Kohlenstoffkette ist beispielsweise -CH₂-CH₂-O-CH₂-CH₃.
Als C₃-C₁₂-Cycloalkylreste dienen beispielsweise Cyclopropyl, Cyclopentyl, Cyclohexyl oder Trimethylcyclohexyl.
Als C₆-C₁₈-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien geeignet 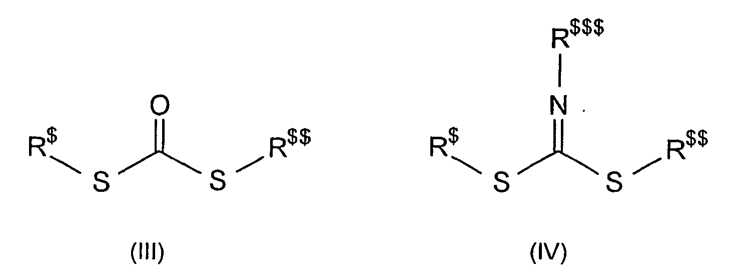 wobei R^{$$$} die vorstehend genannten Reste R^{$} oder R^{$$}, unabhängig von deren Wahl, umfassen kann.

In einer besonders bevorzugten Ausführungsform der Erfindung werden Verbindungen (la) und (IIa)als Kontrollreagenzien eingesetzt.

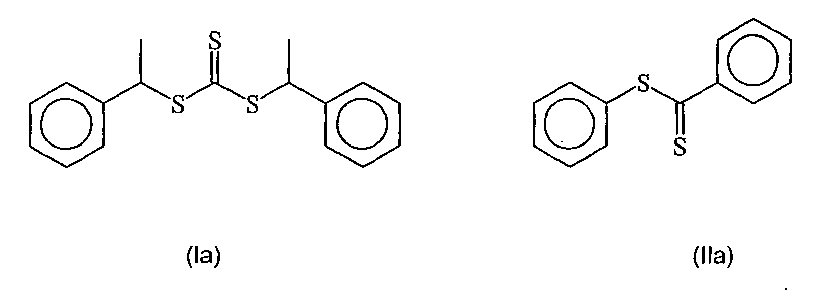

In Verbindung mit den obengenannten kontrolliert radikalisch verlaufenden Polymerisationen werden bevorzugt Initiatorsysteme, die zusätzlich weitere radikalische Initiatoren zur Polymerisation enthalten, insbesondere thermisch zerfallende radikalbildende Azo- oder Peroxo-Initiatoren, eingesetzt. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

In einer sehr vorteilhaften Weiterentwicklung des erfinderischen Verfahrens sind zusätzlich weitere radikalische Initiatoren zur Polymerisation enthalten, insbesondere thermisch zerfallende Initiatoren, besonders radikalbildende Azo- oder Peroxo-Initiatoren. Diese werden bevorzugt vor oder im Verlauf der Polymerisation zugesetzt, wobei die Zugabe der weiteren Initiatoren in mindestens zwei Verfahrensstufen erfolgt.

Gegenstand der Erfindung ist weiterhin ein Verfahren zur Herstellung von Acrylathaftklebemassen, bei welchem eine Monomermischung, welche aus ethylenisch ungesättigten Verbindungen, insbesondere aus (Meth-)Acrylsäure und/oder deren Derivaten, besteht, unter Einsatz des beschriebenen erfinderischen Initiatorsystems radikalisch polymerisiert wird.

Bevorzugt wird als Monomergemisch ein solches bestehend aus acrylischen Monomeren der allgemeinen Formel 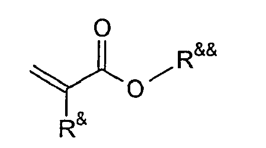 einsetzen, wobei R^{&} = H oder CH₃ und R^{&&} = H oder eine Alkylkette mit 1 - 20 C-Atomen ist.

In einer vorteilhaften Ausführungsform des erfinderischen Verfahrens werden als Monomere zusätzlich Vinylverbindungen mit einem Anteil bis zu 30 Gew.-% eingesetzt, insbesondere eine oder mehrere Vinylverbindungen gewählt aus der folgenden Gruppe:
Vinylester, Vinylhalogenide, Vinylidenhalogenide, Nitrile ethylenisch ungesättigter Kohlenwassserstoffe.
Als Beispiele für derartige Vinylverbindungen seien hier genannt Vinylacetat, N-Vinylformamid, Vinylpyridine, Acrylamide, Acrylsäure, Hydroxyethylacrylat, Hydroxyethylmethacrylat, Ethylvinylether, Vinylchlorid, Vinylidenchlorid, Acrylonitril, Maleinsäureanhydrid, Styrol, ohne sich durch diese Aufzählung unnötig beschränken zu wollen. Weiterhin können alle weiteren Vinylverbindungen, welche unter die oben angeführte Gruppe fallen, eingesetzt werden, aber auch alle anderen Vinylverbindungen, die nicht in die oben genannten Verbindungsklassen fallen.

Zur Polymerisation werden die Monomere dermaßen gewählt, dass die resultierenden Polymere als industriell verwendbare Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb 25 °C.

Die hergestellten Polymere weisen bevorzugt ein mittleres Molekulargewicht von 50.000 bis 600.000 g/mol, mehr bevorzugt zwischen 100.000 und 500.000 g/mol auf. Die Bestimmung des mittleren Molekulargewichtes erfolgt über Größenausschlußchromatographie (SEC) oder Matrix-unterstützte Laser-Desorption/lonisations-Massenspektrometrie (MALDI-MS).
Die nach diesem Verfahren hergestellten Acrylathaftklebemassen besitzen, je nach Reaktionsführung, eine Polydispersität von M_{w}/Mₙ < 4,5.

Es wurde gefunden, dass die lösungsmittelfreie Herstellung eines Polyacrylathaftschmelzklebers in einem Extruder vorteilhaft möglich ist. Insbesondere hat sich der Planetwalzenextruder als geeignet für ein solches Verfahren erwiesen. Die Polymerisation im Planetwalzenextruder hat den Vorteil, dass die Neigung zur Gelbildung wesentlich geringer ist als beispielsweise in einem Doppelschneckenextruder, insbesondere bei Einsatz von regelnden Substanzen und copolymerisierbaren Fotoinitiatoren ist eine besonders geringe Neigung zur Gelbildung festzustellen. Es ergeben sich dadurch engverteilte Polyacrylatschmelzhaftkleber mit sehr guten Eigenschaften zur Weiterverarbeitung, die sich zudem sehr effizient vernetzen lassen.

Aufgrund der üblicherweise kurzen Verweilzeit bei Polymerisationen im Planetwalzenextruder war es nicht vorhersehbar, dass bei Einsatz von polymerisationsregelnden Substanzen während der Polymerisation im Planetwalzenextruder gut vernetzbare Polyacrylatschmelzhaftkleber hergestellt.

Die geringe Polydispersität führt zu Vorteilen bei der Polymerisation im Planetwalzenextruder, wodurch die hervorragenden Mischeigenschaften, durch die sich ein Planetwalzenextruder auszeichnet, verstärkt werden. Durch den Einsatz von regelnden Substanzen entstehen Polymere mit geringer Polydispersität, was sich vorteilhaft auf die lösungsmittelfreie Polymerisation auswirkt. Die Viskosität, die eine entscheidende Rolle gerade bei der lösungsmittelfreien Polymerisation spielt, wird durch die geringe Polydispersität in einen für die lösungsmittelfreie Polymerisation günstigen Bereich geführt. Bei größerer Polydispersität ist die Viskosität ebenfalls erhöht, wodurch die Wärmeabfuhrmöglichkeiten und auch die Mischwirkung im Reaktor verringert werden. Diese Eigenschaften sind für die sichere Durchführung von lösungsmittelfreien Polymerisationen von entscheidender Bedeutung. Ebenso wird durch den positiven Einfluss der Polydispersität auf die Viskosität ein hoher Umsatz ermöglicht sowie die Neigung zur Gelbildung dadurch verringert, was wiederum für die Verwendung der Klebemasse als Schmelzhaftkleber wichtig ist.

Der Planetwalzenextruder ist insbesondere durch seine herausragende Wärmecharakteristik als auch durch die äußerst vielfältigen Möglichkeiten der Temperaturführung für diese lösungsmittelfreie Polymerisation geeignet.

Der verwendete Extruder wird bevorzugt kontinuierlich betrieben. Auch eine teilweise Rückführung des Produktstromes, ein sogenannter Schlaufenbetrieb, kann vorteilhaft sein. Am vorteilhaftesten ist die Herstellung einer lösungsmittelfreien Polyacrylathaftklebemasse in einem hydraulisch gefüllten Planetwalzenextruder. Die hydraulische Füllung vereinfacht die Einhaltung von sauerstofffreien Bedingungen sowie die bestmöglichste Ausnutzung der Verfahrenslänge. Zudem werden Phasengrenzflächen vermieden, die sich störend auf den Polymerisationsprozess auswirken können.

Die Monomere können sowohl einzeln wie auch als Mischung dem Polymerisationsreaktor zudosiert werden. Durch eine Vorvermischung insbesondere des copolymerisierbaren Fotoinitiators wird eine gleichmäßige Verteilung des Reaktionsgemisches sichergestellt. Prinzipiell ist aber auch eine Vermischung im Reaktor oder durch Zusammenführung verschiedener Eduktströme in einem vorgeschalteten kontinuierlichen Mischer, der dynamisch betrieben wird oder ein statischer Mischer oder ein Mikromischer sein kann, möglich.

Die Zugabe weiterer Stoffe wie beispielsweise Initiatoren, Polymerisationsregler sowie weiterer Monomere zum Eduktstrom längs der Verfahrensstrecke des Reaktors kann sinnvoll sein. Bei Verwendung eines Planetwalzenextruders, der aus mehreren hintereinander geschalteten Walzenzylindern besteht, können solche Zugaben über Bohrungen in den Verbindungsflanschen der Walzenzylinder erfolgen.
Mit einer Nachdosierung von geeigneten Initiatoren oder Initiatorengemischen lassen sich hohe Umsätze erzielen, ohne dass gleichzeitig durch hohe Primärradikalkonzentration niedrige Molekulargewichte oder Vergelungen des Polymers induziert werden.

In einer Fortentwicklung des Verfahrens wird das Polymer nach der Polymerisation im Planetwalzenextruder in einem Entgasungsextruder von noch flüchtigen Bestandteilen wie nicht umgesetzten Monomeren entfernt. Diese können nach der Bestimmung der Zusammensetzung wieder dem Eduktstrom zugeführt werden

In einer weiteren Fortentwicklung des Verfahrens wird das Polymer nach der Polymerisation und eventuell notwendiger Entgasung und der eventuellen Zugabe von einem oder mehrerer der Additive, wobei die Zugabe im Polymerisationsextruder und/oder einem nachgeschalteten Compoundierextruder erfolgen kann, aus der Schmelze vorteilhaft gelfrei auf einen Träger beschichtet ("gelfrei" bedeutet die Erfüllung der Anforderungen für eine Beschichtbarkeit der Massen mit den üblicherweise verwendeten und dem Fachmann für diese Zwecke geläufigen Beschichtungsapparaturen, insbesondere für eine Beschichtbarkeit, welche sich durch ein gleichmäßiges (homogenes) Beschichtungsbild ohne Inhomogenitäten oder Schlieren auszeichnet, wenn durch die üblicherweise verwendeten Beschichtungsdüsen oder durch Walzenauftragwerk beschichtet wird).

Sodann ist es vorteilhaft, das Polymer durch energiereiche Strahlung und/oder thermisch zu vernetzen, dies geschieht insbesondere nach der Beschichtung auf den Träger.

Zusammenfassend lässt sich folgendes Schema für eine vorteilhafte Vorgehensweise aufstellen:
- Polymerisationsprozess einer Monomermischung enthaltend neben Monomeren auf (Meth-)Acrylsäurebasis polymerisationsregelnde Substanzen,
- wobei die Polymerisation in einem lösungsmittelfreien Prozess erfolgt,
- der durch die Verwendung eines Planetwalzenextruders möglich wird.
- Durch den Einsatz des Kontrollreagenzes werden Polydispersitäten von 1,2 bis 4,5, insbesondere bis weniger als 4, erzielt.
- Dem Polymerisationsprozess kann ein Entgasungsprozess folgen.
- Das Polymer kann direkt weiterverarbeitet werden. Ein Lösungsmittelrecycling ist unnötig.
- Das Polymer wird aus der Schmelze gelfrei beschichtet und
- nach der Beschichtung mit energiereicher Strahlung und/oder thermisch vernetzt wird.
   Für die Verwendung der nach dem erfinderischen Verfahren hergestellten Polyacrylate als Haftklebemassen werden die Polyacrylate zur Optimierung optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren vorteilhaften Weiterentwickung werden zu der Haftklebemasse ein oder mehrere Weichmacher, wie z.B. niedermolekulare Polyacrylate, Phthalate, Walöweichmacher oder Weichharze hinzudosiert.

Die Acrylathotmelts können des weiteren mit einem oder mehreren Additiven wie Alterungsschutzmitteln, Lichtschutzmitteln, Ozonschutzmitteln, Fettsäuren, Harzen, Keimbildnern, Blähmitteln, Compoundierungsmitteln und/oder Beschleunigern abgemischt sein.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.

Insbesondere für die Verwendung als Haftklebemasse ist es für das erfinderische Verfahren vorteilhaft, wenn das Polyacrylat bevorzugt aus der Schmelze auf einen Träger oder auf ein Trägermaterial als Schicht aufgebracht wird.

Die Polyacrylatmasse wird dann in einer günstigen Variante des Verfahrens als Heißschmetzmasse in Form einer Schicht auf einen Träger oder auf ein Trägermaterial aufgetragen.

Als Trägermaterialien für die Haftklebemasse, beispielsweise für Klebebänder, werden die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwendet. Diese Aufzählung ist nicht abschließend.

Es ist für die Verwendung als Haftklebemasse besonders günstig, die Polyacrylate nach der Beschichtung auf den Träger oder auf das Trägermaterial zu vernetzen. Zur Herstellung der Haftklebebänder werden die oben beschriebenen Polymere hierzu optional mit Vernetzern abgemischt. Die Vernetzung kann in günstiger Weise thermisch oder durch energiereiche Strahlung, im letzteren Fall insbesondere durch Elektronenstrahlung (ES) oder nach Zugabe geeigneter Photoinitiatoren durch ultraviolette Strahlung hervorgerufen werden.

Bevorzugte unter Strahlung vernetzende Substanzen gemäß dem erfinderischen Verfahren sind z.B. bi- oder multifunktionelle Acrylate oder bi- oder multifunktionelle Urethanacrylate, bi- oder multifunktionelle lsocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.
Als Photoinitiatoren eignen sich bevorzugt Norrish-Typ 1- und -Typ II-Spalter, wobei einige Beispiele für beide Klassen sein können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, wobei diese Aufzählung keinen Anspruch auf Vollständigkeit besitzt.

Insbesondere ist die Verwendung der wie beschrieben hergestellten Polyacrylathaftklebemasse für ein Klebeband von Vorteil, wobei die Polyacrylathaftklebemasse ein- oder beidseitig auf einem Träger aufgetragen sein kann.

### Beispiele

### Praktische Durchführungen

### Durchführung der Polymerisation (Methode A):

Für die Durchführung der Polymerisation wurde ein Planetwalzenextruder bestehend aus drei hintereinander geschalteten Walzenzylindern als Reaktor verwendet. Die verwendeten Walzenzylinder haben einen Walzendurchmesser von D = 70 mm und wurden mit 7 Planetenspindeln bestückt. Sowohl Zentralspindel als auch Walzenzylinder sind mit voneinander getrennten Temperierkreisen ausgestattet. Als Temperiermedium wurde Druckwasser verwendet.
Für die Polymerisation wird der Reaktor kontinuierlich betrieben. Vor Beginn der Dosierung wird der Reaktor 1 Stunde mit Stickstoff gespült. Aus Monomeren und Initiator wird eine Mischung hergestellt. Durch diese Vorlage wird zur Inertisierung Stickstoff durchgeleitet. Mittels einer Pumpe wird die Reaktionsmischung durch einen statischen Mischer, der mit weiteren Zulaufvorrichtungen ausgestattet ist, und dann durch einen Wärmetauscher in den Reaktor gefördert. Die Zugabe der Reaktionsmischung in den Reaktor erfolgt kontinuierlich über eine Bohrung am Anfang des ersten Walzenzylinders. Am Reaktorausgang befindet sich ein Ventil, mit dessen Hilfe die hydraulische Füllung des Reaktors sichergestellt wird.
Der Wärmetauscher zur Feedvorwärmung, Zentralspindel und Walzenzylinder werden mit den jeweils gewünschten Temperaturen temperiert. Bei der Zentralspindel wurde eine Temperatur von 80 °C eingestellt, das Medium zur Feedvowärmung auf 90°C. Die Walzenzylinder 1 und 3 wurden mit 100 °C, der Walzenzylinder 2 mit 95°C temperiert.
Die Drehzahl der Zentralspindel betrug 50 Umdrehungen pro Minute. Die hydrodynamische Verweilzeit betrug 15 min. Nach dem Austritt aus dem Reaktor wird eine Probe zur Umsatzbestimmung genommen. Anschließend werden noch vorhandene flüchtige Bestandteile in einem Entgasungsextruder entfernt.

### Herstellung der Lappenmuster (Methode B):

Die Klebmasse wird über einen Hotmelt-Coater mit zwei beheizbaren Walzen auf eine 23 µm dicke mit einem Saran-Primer versehende PET-Folie mit einem Masseauftrag von 50 g/m² beschichtet.

### Herstellung von Bis-2,2'-phenylethyl-thiocarbonat

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72 %.

Charakterisierung: ¹H-NMR (CDCl₃) δ (ppm) : 7,20-7,40 (m, 10 H), 1,53, 1,59 (2 x d, 6 H), 3,71, 381 (2 x m, 2 H).

### Testmethoden

### Folgende Testmethoden wurden angewendet, um die Eigenschaften der Polymere und der hergestellten Haftklebemassen zu evaluieren.

### Umsatzbestimmung (Test A)

Die Bestimmung des Umsatzes erfolgte gravimetrisch und wird prozentual zu der Gewichtsmenge der eingesetzten Monomere angegeben. Zur Isolierung des Polymers wird das Polymer im Vakuumschrank getrocknet. Das Gewicht des Polymers wird gewogen und geteilt durch die Einwaage der eingesetzten Monomere. Der berechnete Wert entspricht dem prozentualen Umsatz.

### Gelpermeationschromatographie GPC (Test B)

Die Bestimmung des mittleren Molekulargewichtes M_{W} und der Polydisperistät PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å. ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### Beispiele

### Beispiel 1: (breite M_{w}-Verteilung; hohe Molmasse)

Nach Methode A wurde ein Polymer hergestellt. Eingesetzt wurden 5 % Acrylsäure, 95 % n-Butylacrylat und 0,015 % Azoisobutyronitril (AIBN, Vazo 64™, Fa. DuPont).

Das mittlere Molekulargewicht und die Polydispersität wurden mittels Test B bestimmt, der Umsatz durch Test A und der Gelwert nach Test C.
Anschließend wurde nach Methode B ein Lappenmuster hergestellt.

### Beispiel 2: (enge M_{w}-Verteilung, niedrige Molmasse)

Nach Methode A wurde ein Polymer hergestellt. Eingesetzt wurden 5 % Acrylsäure, 95 % n-Butylacrylat sowie 0,124 % Bis-2,2'-phenylethyl-thiocarbonat und 0,015 % Azoisobutyronitril (AIBN, Vazo 64™, Fa. DuPont). Das mittlere Molekulargewicht und die Polydispersität wurden mittels Test B bestimmt, der Umsatz durch Test A und der Gelwert nach Test C. Anschließend wurde nach Methode B ein Lappenmuster hergestellt.

### Beispiel 3: (enge M_{w}-Verteilung, niedrige Molmasse)

Nach Methode A wurde ein Polymer hergestellt. Eingesetzt wurden 1 % Acrylsäure, 49,5 % n-Butylacrylat, 49,5 % 2-Ethylhexylacrylat sowie 0,124 % Bis-2,2'-phenylethylthiocarbonat und 0,015 % Azoisobutyronitril (AIBN, Vazo 64™, Fa. DuPont). Das mittlere Molekulargewicht und die Polydispersität wurden mittels Test B bestimmt, der Umsatz durch Test A und der Gelwert nach Test C.
Anschließend wurde nach Methode B ein Lappenmuster hergestellt.

### Resultate

### In der folgenden Tabelle 1 sind zunächst die Ergebnisse der Polymerisationen zusammengestellt:

| Tabelle 1 | | | | |
|---|---|---|---|---|
| Beispiel | M_{W} [g/mol] | Polydispersität PD | Umsatz [%] | Notwendige Walzentemperatur für die Beschichtung [°C] |
| 1 | 2.380.000 | 6.1 | 72 | Nicht beschichtbar |
| 2 | 557.000 | 3.5 | 65 | 120 |
| 3 | 431.000 | 3.4 | 63 | 110 |

| | | | | |
|---|---|---|---|---|
| M_{W}: mittleres Molekulargewicht aus GPC PD: M_{W}/M_{N} = Polydispersität aus GPC | | | | |

Beispiel 1 dient als Referenzbeispiel. Für das erfindungsgemäße Verfahren sind die Beispiele 2 bis 3 angefügt. In den Beispielen 2 bis 3 wurden Acrylathaftklebemassen mit niedriger Molmasse hergestellt. Durch den Einsatz eines Reglers wurden dabei Polymere mit einer engverteilten Molekulargewichtsverteilung erhalten.

Die Vorteile des erfindungsgemäßen Verfahrens werden bei Betrachtung der Beschichtbarkeit der Acrylatmasse deutlich. Beispiel 1 ist sehr hochmolekular und lässt sich nicht beschichten. Durch den Einsatz des Reglers bei Beispiel 2 und 3 wird das Molekulargewicht so weit erniedrigt, dass eine für die Anwendung im Klebeband notwendige Beschichtung möglich ist. So ist Beispiel 2 mit einem Mw von 557.000 g/mol bei 120 °C und Beispiel 3 mit einem niedrigeren Mw von 431.000 g/mol schon bei 110 °C beschichtbar. Durch das erfindungsgemäße Verfahren wird eine Verarbeitung der hergestellten Klebemasse bei niedriger Beschichtungstemperatur möglich. Somit kann eine komplett lösemittelfreie Herstellung der Klebebänder erfolgen.

## Patentansprüche

1. Verfahren zur kontinuierlichen lösungsmittelfreien Polymerisation von Acrylmonomeren zu Polyacrylaten unter Anwesenheit polymerisationsregelnder Substanzen, **dadurch gekennzeichnet, dass** zumindest ein Polymerisationsschritt innerhalb zumindest eines Reaktionsextruders durchgeführt wird.

2. Verfahren nach Anspruch 1, **dadurch gekennzeichnet, dass** die polymerisationsregelnden Substanzen aus der Gruppe der Nitroxid- und/oder der RAFT-Regler, insbesondere der Alkoxyamine, der Triazolinylverbindungen, der Thioester und/oder Thiocarbonate gewählt werden.

3. Verfahren nach Anspruch 1, **dadurch gekennzeichnet, dass** die Polyacrylate eine Polydispersität D = M_{w}/Mₙ von nicht mehr als 4,5 aufweisen.

4. Verfahren nach zumindest einem der vorangehenden Ansprüche, **dadurch gekennzeichnet,. dass**
die Polyacrylate gewichtsmittlere Molmassen von 50.000 bis 600.000 g/mol, insbesondere von 100.000 bis 500.000 g/mol aufweisen.

5. Verfahren nach zumindest einem der vorangehenden Ansprüche, **dadurch gekennzeichnet, dass** der zumindest eine Polymerisationsschritt als Substanzpolymerisation durchgeführt wird, also ohne Zugabe von Lösungsmittel erfolgt.

6. Verfahren nach zumindest einem der vorangehenden Ansprüche, **dadurch gekennzeichnet, dass**
der Reaktionsextruder ein Planetwalzenextruder ist, insbesondere ein hydraulisch gefüllter Planetwalzenextruder.

7. Verfahren nach zumindest einem der vorangehenden Ansprüche, **dadurch gekennzeichnet, dass**
stromab der Verfahrenslänge des Reaktors weitere Substanzen, insbesondere Initiatoren, Monomere, copolymerisierbare Fotoinitiatoren sowie Polymerisationsregler zugegeben werden.

8. Verfahren nach zumindest einem der vorangehenden Ansprüche, **dadurch gekennzeichnet, dass**
nach dem Polymerisationsprozess eine Entgasung erfolgt.

9. Verfahren nach zumindest einem der vorangehenden Ansprüche, **dadurch gekennzeichnet, dass**
das Polyacrylat nach der Polymerisation und gegebenenfalls anschließender Entgasung aus der Schmelze insbesondere gelfrei auf einen Träger beschichtet wird.

10. Verfahren nach zumindest einem der vorangehenden Ansprüche, **dadurch gekennzeichnet, dass**
das Polymer durch energiereiche Strahlung und/oder thermisch vernetzt wird, insbesondere nach der Beschichtung auf einen Träger.

11. Verfahren nach zumindest einem der vorangehenden Ansprüche, **dadurch gekennzeichnet, dass**
vor und/oder während der Polymerisation thermisch zerfallende radikalbildende Initiatoren zugegeben werden, insbesondere Azo- und/oder Peroxo-Initiatoren.

## Claims

1. Process for continuous solvent-free polymerization of acrylic monomers to polyacrylates in the presence of polymerization regulators, **characterized in that** at least one polymerization step is carried out within at least one reaction extruder.

2. Process according to Claim 1, **characterized in that** the polymerization regulators are selected from the group of nitroxide regulators and/or RAFT regulators, particularly the alkoxyamines, triazolinyl compounds, thioesters and/or thiocarbonates.

3. Process according to Claim 1, **characterized in that** the polyacrylates have a polydispersity D = M_{w}/Mₙ of not more than 4.5.

4. Process according to at least one of the preceding claims, **characterized in that** the polyacrylates have weight-average molar masses of 50 000 to 600 000 g/mol, in particular of 100 000 to 500 000 g/mol.

5. Process according to at least one of the preceding claims, **characterized in that** the at least one polymerization step is carried out as a bulk polymerization, in other words without addition of solvent.

6. Process according to at least one of the preceding claims, **characterized in that** the reaction extruder is a planetary roller extruder, in particular a hydraulically filled planetary roller extruder.

7. Process according to at least one of the preceding claims, **characterized in that** downstream of the screw length of the reactor further substances, particularly initiators, monomers, copolymerizable photoinitiators, and polymerization regulators, are added.

8. Process according to at least one of the preceding claims, **characterized in that** the polymerization process is followed by devolatilization.

9. Process according to at least one of the preceding claims, **characterized in that**, after the polymerization and any subsequent devolatilization, the polyacrylate is coated from the melt, in particular without gel, onto a backing.

10. Process according to at least one of the preceding claims, **characterized in that** the polymer is crosslinked by means of high-energy radiation and/or thermally, in particular after coating onto a backing.

11. Process according to at least one of the preceding claims, **characterized in that** before and/or during the polymerization thermally decomposing, free-radical- forming initiators are added, especially azo initiators and/or peroxo initiators.

## Revendications

1. Procédé pour la polymérisation continue sans solvant de monomères acryliques en polyacrylates, en présence de substances régulatrices de polymérisation, **caractérisé en ce qu'**au moins une étape de polymérisation est effectuée à l'intérieur d'au moins une extrudeuse de réaction.

2. Procédé selon la revendication 1, **caractérisé en ce que** les substances régulatrices de polymérisation sont choisies dans le groupe des régulateurs nitroxyde et/ou des régulateurs RAFT (transfert par fragmentation-addition réversible), en particulier des alcoxyamines, des composés triazolinyle, des thioesters et/ou des thiocarbonates.

3. Procédé selon la revendication 1, **caractérisé en ce que** les polyacrylates présentent une polydispersité D = M_{w}/Mₙ n'excédant pas 4,5.

4. Procédé selon au moins l'une des revendications précédentes, **caractérisé en ce que** les polyacrylates ont des masses moléculaires moyennes en poids de 50 000 à 600 000 g/mole, en particulier de 100 000 à 500 000 g/mole.

5. Procédé selon au moins l'une des revendications précédentes, **caractérisé en ce que** ladite au moins une étape de polymérisation est effectuée en tant que polymérisation en masse, c'est-à-dire s'effectue sans addition de solvant.

6. Procédé selon au moins l'une des revendications précédentes, **caractérisé en ce que** l'extrudeuse de réaction est une extrudeuse à cylindres planétaire, en particulier une extrudeuse à cylindres planétaire à remplissage hydraulique.

7. Procédé selon au moins l'une des revendications précédentes, **caractérisé en ce qu'**en aval de la longueur de processus du réacteur sont ajoutées d'autres substances, en particulier des amorceurs, des monomères, des photoamorceurs copolymérisables ainsi que des régulateurs de polymérisation.

8. Procédé selon au moins l'une des revendications précédentes, **caractérisé en ce qu'**un dégazage est effectué après le processus de polymérisation.

9. Procédé selon au moins l'une des revendications précédentes, **caractérisé en ce qu'**après la polymérisation et éventuellement le dégazage subséquent, à partir de la masse fondue le polyacrylate est appliqué, en particulier sans gel, sur un support.

10. Procédé selon au moins l'une des revendications précédentes, **caractérisé en ce que** le polymère est réticulé par voie thermique et/ou par un rayonnement à haute énergie, en particulier après l'application sur un support.

11. Procédé selon au moins l'une des revendications précédentes, **caractérisé en ce qu'**avant et/ou pendant la polymérisation on ajoute des amorceurs générateurs de radicaux, se décomposant à la chaleur, en particulier des amorceurs azo et/ou peroxo.
